(19) Europäisches Patentamt

European Patent Office

Office européen des brevets

(11) **EP 1 273 115 B1**

(12) **EUROPÄISCHE PATENTSCHRIFT**

(45) Veröffentlichungstag und Bekanntmachung des Hinweises auf die Patenterteilung:
**29.09.2004 Patentblatt 2004/40**

(21) Anmeldenummer: **01937975.9**

(22) Anmeldetag: **10.04.2001**

(51) Int Cl.⁷: **H04B 17/00**, H04Q 7/36

(86) Internationale Anmeldenummer:
**PCT/DE2001/001377**

(87) Internationale Veröffentlichungsnummer:
**WO 2001/080468 (25.10.2001 Gazette 2001/43)**

(54) **VERFAHREN ZUR PLANUNG DER MOBILFUNKVERSORGUNG INNERHALB VON GEBÄUDEN**

METHOD FOR PLANNING MOBILE RADIO COVERAGE INSIDE BUILDINGS

PROCEDE DE PLANIFICATION DE LA COUVERTURE RADIO A L'INTERIEUR DE BATIMENTS

(84) Benannte Vertragsstaaten:
**AT CH DE GB LI NL**

(30) Priorität: **13.04.2000 DE 10018439**

(43) Veröffentlichungstag der Anmeldung:
**08.01.2003 Patentblatt 2003/02**

(73) Patentinhaber: **T-Mobile Deutschland GmbH
53227 Bonn (DE)**

(72) Erfinder:
  • **SLAWITSCHKA, Laslo
    53229 Bonn (DE)**
  • **ZGUNEA, Gabriel
    53127 Bonn (DE)**

(74) Vertreter: **Riebling, Peter, Dr.-Ing.
Patentanwalt
Postfach 31 60
88113 Lindau (DE)**

(56) Entgegenhaltungen:
**DE-A- 19 703 916**

• **FORTUNE S J ET AL: "WISE design of indoor wireless systems: practical computation and optimization" IEEE COMPUTATIONAL SCIENCE & ENGINEERING, IEEE COMPUTER SOCIETY, US, Bd. 2, Nr. 1, 1995, Seiten 58-68, XP002175089 ISSN: 1070-9924**
• **TORNEVIK C ET AL: "PROPAGATION MODELS, CELL PLANNING AND CHANNEL ALLOCATION FOR INDOOR APPLICATIONS OF CELLULAR SYSTEMS" PERSONAL COMMUNICATION - FREEDOM THROUGH WIRELESS TECHNOLOGY. SECAUCUS, NJ., MAY 18 - 20, 1993, PROCEEDINGS OF THE VEHICULAR TECHNOLOGY CONFERENCE, NEW YORK, IEEE, US, Bd. CONF. 43, 18. Mai 1993 (1993-05-18), Seiten 867-870, XP000393318 ISBN: 0-7803-1267-8**
• **MURCH R D ET AL: "IMPROVED EMPIRICAL MODELING FOR INDOOR PROPAGATION PREDICTION" PROCEEDINGS OF THE VEHICULAR TECHNOLOGY CONFERENCE. CHICAGO, JULY 25 - 28, 1995, NEW YORK, IEEE, US, Bd. 1 CONF. 45, 25. Juli 1995 (1995-07-25), Seiten 439-443, XP000550211 ISBN: 0-7803-2743-8**

**Beschreibung**

Die Erfindung betrifft ein Verfahren zur Planung der Mobilfunkversorgung innerhalb von Gebäuden, insbesondere unter Verwendung eines Prädiktionsverfahrens für den im Gebäude auftretenden HF-Empfangsleistungspegel, wobei die Sendeantenne zur Versorgung des Gebäudes innerhalb des Gebäudes angeordnet ist.

Mit den Maxwell'schen Gleichungen kann die elektromagnetische Wellenausbreitung in beliebigem Fall analytisch beschrieben werden, wenn die Anfangs- und Grenzwerte gegeben sind.

Aus der DE 197 03 916 A1 ist ein Verfahren zur Prädiktion der Gebäudedämpfung bzw. des HF-Empfangsleistungspegels innerhalb eines Gebäudes bei Mobilfunksystemen bekannt, wobei hier davon ausgegangen wird, dass die Sendeantenne außerhalb des Gebäudes angeordnet ist.

Bei der Ausbreitung der Wellen in Gebäuden, bei einer Anordnung der Sendeantenne innerhalb des Gebäudes, sind die Gebäudestrukturen so komplex, dass die Ausgangswerte zur Anwendung der Maxwell'schen Gleichungen nicht bestimmt werden können. Somit existiert in diesem Fall keine geschlossene Lösung der genannten Gleichungen. Mit den zur Zeit existierenden Verfahren zur Prädiktion von HF-Empfangsleistungspegeln in Gebäuden, den sogenannten Semi-empirischen Modellen, kann der HF-Empfangsleistungspegel nur im Geschoss, wo sich die Sendeantenne befindet und nur in ihrer unmittelbaren Umgebung prädiziert werden.

In dem Artikel von Fortune, S. J. et al: "WISE Design of Indoor Wireless Systems: Practical Computation and Optimization" in IEEE Computational Science & Engineering, IEEE Computer Society, US, vol. 2, No. 1, 1995, Seiten 58-68, ISSN 1070-9924, ist ein Verfahren zur Planung der Mobilfunkversorgung innerhalb eines zu versorgenden Gebäudes beschrieben, das auf einer rechnergestützten Simulation beruht. Eine virtuelle Sendeantenne wird unter Vorgabe bestimmter Sendeparameter an einem beliebigen zur Verfügung stehenden Ort innerhalb des Gebäudes positioniert. Zunächst müssen die Abmessungen und Positionen aller Wände, Decken und Böden innerhalb des Gebäudes erfasst werden. Anhand dieser Daten wird ein Ausbreitungsmodell erstellt und mit Hilfe eines Raytracing-Verfahrens der zu erwartende Versorgungsbereich der Antenne berechnet. Umfasst der ermittelte Versorgungsbereich nicht das gesamte Gebäude, wird der Vorgang mit anderen Sendeparametern der virtuellen Antenne oder der Positionierung einer weiteren virtuellen Antenne wiederholt. Der Nachteil bei diesem Prädiktionsverfahren ist die aufwändige Erfassung aller Gebäudemaße, d.h. Wand-, Decken, Bodenflächen, und die Berechnung eines Ausbreitungsmodells für die Anwendung des Raytracing-Verfahrens.

Die Aufgabe der Erfindung besteht darin, ein Verfahren zur Planung der Mobilfunkversorgung innerhalb von Gebäuden anzugeben, das eine schnelle und ausreichend genaue Prädiktion des HF-Empfangsleistungspegels an jedem beliebigen Ort des Gebäudes erlaubt, ohne dass eine Erstellung von aufwändigen Ausbreitungsmodellen notwendig ist.

Diese Aufgabe wird durch die Merkmale der unabhängigen Patentansprüche 1 und 5 gelöst.

Mit dem erfindungsgemäßen Planungsverfahren basierend auf einem Näherungsverfahren zur Ermittlung der zu erwartenden

HF-Empfangsleistung lässt sich die GSM-Funkversorgung in den Stockwerken eines Gebäudes planen. Die zur Versorgung notwendigen GSM-Sender sind im Gebäude untergebracht. Die Versorgungsplanung wird gemäß den folgenden Schritten durchgeführt:

- Es wird ein Sender (mit der Sendeantenne) auf einem zur Verfügung stehenden Ort des zu versorgenden Gebäudes positioniert.
- Mit der erfindungsgemäßen Näherungsmethode wird die Größe der Nutzzelle (Versorgungsbereich) innerhalb des Gebäudes ermittelt. Wenn die Versorgung nicht ausreichend ist, wird untersucht, ob sich das Versorgungsgebiet mit der Änderung der Senderparameter auf das ganze Gebäude ausdehnen lässt.
- Wenn die Versorgung mit einem Sender nicht möglich ist, wird auf einem ent-sprechenden Ort ein zweiter Sender positioniert. Anschließend wird die Größe der Nutzzelle (Versorgungsgebiet) auch für diesen Sender ermittelt.
- Mit eventueller mehrmaliger Wiederholung des o.g. Vorgehens wird die voll-ständige Versorgung des Gebäudes erreicht.

Es hat sich gezeigt, dass die Funkversorgung eines Gebäudes in vielen Fällen mit nur einem Sender möglich ist.

Mit der Erfindung ist eine Funkplanung und Prädiktion des HF-Empfangsleistungspegels im Downlink in Gebäuden mit ausreichender Genauigkeit bis zum sechsten Stockwerk unterhalb und oberhalb des Stockwerkes, in welchem die Sendeantenne positioniert ist, möglich. Der Sender kann an einem beliebigen Ort des Gebäudes aufgestellt werden. Das Verfahren kann für die am häufigsten vorkommenden Gebäudetypen, d.h. Stahlbetonskelett- und Mauerwerksgebäude verwendet werden.

Der Vorteil der Erfindung liegt darin, dass zur Planung der Funkversorgung in Gebäuden auf aufwendige Messreihen verzichtet werden kann. Es sind auch keine aufwendigen Berechungen anhand von Semi-empirischen Modellen, z.B.

Raytracing-Verfahren, notwendig. Das vorschlagende Verfahren liefert sehr schnell ausreichend genaue Ergebnisse über die zu erwartende Funkversorgung in einem Gebäude und das gleichzeitig für eine große Anzahl von Stockwerken. Mit Ausnahme weniger Gebäudeparameter, wie unter anderem die Gebäudeabmessungen, sind zur Durchführung des Verfahrens keine weiteren Eingabeparameter erforderlich.

Vorteilhafte Ausgestaltungen und Weiterbildungen der Erfindung ergeben sich aus den abhängigen Patentansprüchen.

Nachstehend wird die Erfindung anhand eines Ausführungsbeispiels mit Bezug auf die Zeichnungsfiguren näher beschrieben. Aus den Zeichnungen und deren Beschreibung ergeben sich weitere Merkmale und Vorteile der Erfindung. Es zeigt:

Figur 1: den möglichen Aufbau eines Messsenders zur Durchführung von Messungen innerhalb eines Gebäudes;

Figur 2: den möglichen Aufbau eines mobilen Messempfängers zur Durchführung von Messungen innerhalb eines Gebäudes;

Figur 3: eine Darstellung eines typischen HF-Empfangsspannungspegels in Abhängigkeit von der zurückgelegten Wegstrecke;

Figur 4: ein horizontaler Querschnitt eines Stockwerkes eines Gebäudes, wo sich die Sendeantenne S (0,0) befindet.

Figuren 5 bis 11: Messwerte des Empfangsleistungspegels und deren Approximation für verschiedene Stockwerke eines Gebäudes.

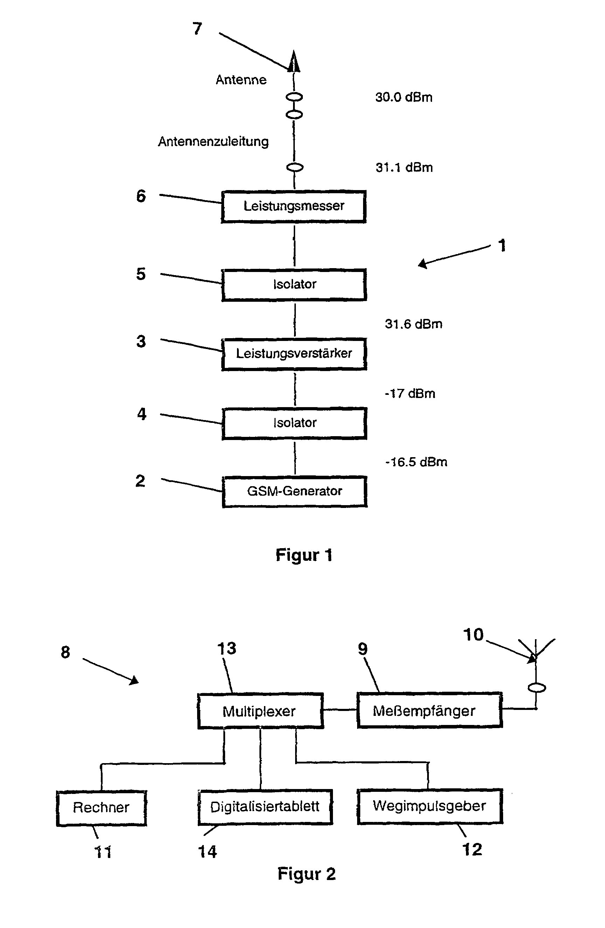

In den Figuren 1 bis 3 ist ein typisches Meßsystem zur Durchführung von Messungen innerhalb eines Gebäudes dargestellt. Das Meßsystem besteht aus einem Messender und einem mobilen Messempfangssystem.

Der Messender gemäss Figur 1 liefert ein GMSK-moduliertes Sendesignal.

Die Pegelwerte sind am Ausgang der einzelnen Stufen im Fall von $P_t$ = 1 W dargestellt.

Die für die Messungen verwendeten Downlink-Funkkanäle sind GSM-Messkanäle.

Der Leistungsverstärker 3 verstärkt das Eingangssignal des GSM-Generators 2 um ca. 48 dB. Die Isolatoren 4, 5 am Ausgang des Signalgenerators 2 und des Leistungsverstärkers 3 sorgen für eine gute Impedanzanpassung. Die reflektierten Signale werden mit mindestens 20 dB unterdrückt. Damit wird dem Entstehen von störenden Intermodulationsprodukten besonders an der nichtlinearen Übertragungscharakteristik der Verstärkerendstufe vorgebeugt. Dem Isolator 5 kann ein Leistungsmesser 6 nachgeschaltet sein.

Die Sendeantenne 7 ist ein vertikal polarisierter λ/2-Dipol.

Die Halbwertsbreite in der vertikalen Ebene beträgt 78 °. Der Antennengewinn ist 2 dBi im Frequenzbereich von 870 bis 960 MHz. Das Stehwellenverhältnis am Antenneneingang ist etwa 1.15.

Die Höhe des Antennenfußpunktes über dem Boden ist bei der Sendeantenne auf 1.67 m eingestellt.

Der HF-Empfangsspannungspegel ($U_r$ in dBμV) wird gemäss Figur 2 mit einem beweglichen Messempfangssystem 8 erfasst. Die Messgenauigkeit liegt bei ± 1.5 dB im Pegelbereich von -10 dBμV...+60 dBμV.

Der Messempfänger 9 hat die gleiche Antenne 10 in gleicher Höhe über dem Boden wie der Sender. Die HF-Nutzbandbreite des Empfängers 9 liegt zwischen 0.4 GHz und 1 GHz. Die ZF-Bandbreite beträgt $B_0$ = 120 KHz.

Das Meßsystem liefert 200 Messwerte in einer Sekunde, aus denen in 0.15 m Distanzen arithmetische Mittelwerte gebildet werden. Die Messdaten werden von einem Rechner 11 erfasst. Ein Wegimpulsgeber 12 liefert die Impulse für den Mittelungsabstand. Der Multiplexer 13 erfüllt die Aufgabe einer Zentraleinheit. Mit Hilfe eines Digitalisiertabletts 14 können die Messdaten der Messroute zugeordnet werden.

Der Messsender 1 wird möglichst in der mittleren Gebäudehöhe (mittleres Stockwerk) an einem geeigneten zur Verfügung stehenden Ort aufgestellt.

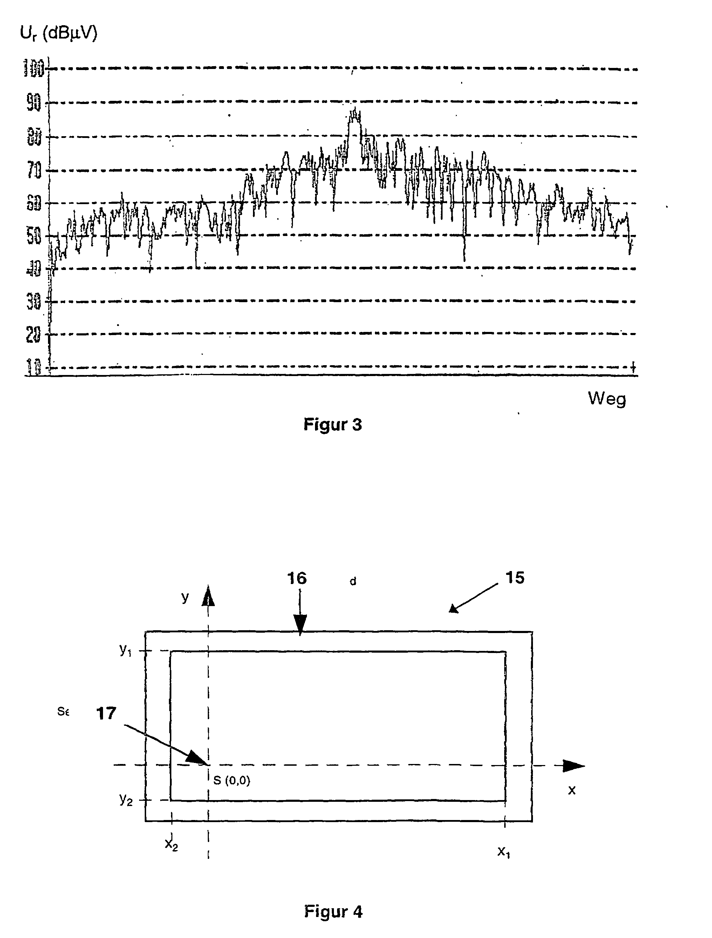

Mit dem mobilen Messempfänger 8 werden Pegelmessungen möglichst auf jeder Flächeneinheit der Stockwerke durchgeführt. Figur 3 zeigt ein typisches Diagramm der HF-Empfangsspannung $U_r$ entlang einer Messstrecke als Beispiel. Die zurückgelegte Messstrecke wird mit dem Auswerteprogramm des Rechners 11 ermittelt.

Aus den HF-Empfangsspannungspegeln und den zugehörigen Koordinaten der Messpunkte wird eine Datei für jedes Geschoss des Gebäudes erstellt. Anschließend wird der Referenz-HF-Empfangsleistungspegel ($P_{rref}$ in dBm) mit Konversion der $U_r$ - Werte in HF-Empfangsleistung berechnet. Die Gleichung

$$P_{rref}=U_r-107-G_t-G_r+a_r -1.0_*\log(P_t /1W)+10_*\log(B/B_0) \tag{1}$$

beschreibt den Fall, wenn die Sende- und Empfangsantennen verlustlos und isotrop, die Antennenzuleitung zur Empfangsantenne verlustlos und $P_t$ = 1 W sind. In (1) bezeichnet B die 3-dB-Bandbreite des GMSK-modulierten Sendesignals in kHz.

Die Bauart von Gebäuden lässt sich durch die Bausubstanz der Außenwände kennzeichnen und beeinflusst die elektromagnetische Wellenausbreitung im Gebäude. Die Funkversorgung mit internem Sender wird überwiegend bei größeren öffentlichen Gebäuden angewandt. Diese sind meistens Büro-, Firmengebäude, Institutionen, Warenhäuser usw. Folgende Bauarten kommen für diese Gebäudetypen in den meisten Fällen vor:

- Stahlbetonskelett-Konstruktion mit Mauerwerk oder Stahlbeton-Außenwänden. Die Verkleidung ist Putz oder Naturstein.
- Mauerwerksgebäude (Ziegel-, Kalksand-, Gasbeton oder Bimsbaustein) mit oder ohne Verputz oder mit Naturstein-Verkleidung.

Die Glasflächen in den Außenwänden sind meistens nicht metallisch bedampft.

Die Ergebnisse des anhand der Figuren 1 bis 3 beschriebenen Messverfahrens lassen sich mittels des erfindungsgemäßen Näherungsverfahrens ausreichend genau prädizieren.

Bei der Entwicklung des Verfahrens wurde danach gestrebt, die notwendigen Anfangsparameter, d.h. die notwendigen Gebäudedaten, auf ein Minimum zu reduzieren. Somit ist die Anwendung des Modells ohne eine umfangreiche Gebäudedatenbank möglich.

Nach dem jetzigen Stand sind für die Näherungsmethode folgende Gebäudeparameter notwendig:

- Gebäudeart
- Breite- und Länge des Gebäudes zwischen den Innenseiten der Außenwände
- Anzahl- und Höhe der Stockwerke
- Art der Verglasung

Die aufgezählten Daten sind in der Regel aus der üblichen Baubeschreibung, die für jedes Gebäude vorhanden ist, zu entnehmen.

Im folgenden wird die Approximation der Gleichung (1) und anschließend die Prädiktion der HF-Empfangsleistung im allgemeinen Fall beschrieben.

Die Untersuchungen haben ergeben, dass $P_{rref}$ mit der folgenden Funktion zweier reeller Variabler ($P_{ra}(x,y)$ in dBm)

$$P_{ra}(x,y)=s[(|x|-Max(x_1,|x_2|))^2 + (|y|-Max(y_1,|y_2|))^2]-f \qquad (2)$$

approximiert werden kann.

Das Bild von Gleichung (2) ist eine Fläche im dreidimensionalen Raum. Durch die zu den x, $P_{ra}$-Koordinatenebenen parallelen Schnittflächen, d.h. $y = y_j$ = konstant entstehen Schnittkurven der Fläche. Die in die x,$P_{ra}$-Ebene projizierten Schnittkurven ergeben $P_{ra}(x,y_j)$:

$$P_{ra}(x,y_j)=s[(|x|-Max(x_1,|x_2|))^2 + (|y_j|-Max(y_1,|y_2|))^2]-f \qquad (3)$$

In Gleichung (3) bezeichnet der Absolutwert der unabhängigen Variable $|x|$ den absoluten Betrag der Distanz von der Sendeantenne in x-Richtung. Der konstante Wert $|y_j|$ bedeutet den absoluten Betrag der Distanz von der Sendeantenne in y-Richtung.

Figur 4 veranschaulicht die Entfernungen $x_1$, $x_2$, $y_1$, $y_2$ in m von der Sendeantenne 17 im Ursprung des rechtwinkligen Koordinatensystems (x, y, $P_{ra}$) bis zu den entsprechenden Innenseiten der Gebäudeaußenwände 16 des Gebäudes 15.

In Gleichung (3) bestimmt s die Kurvensteilheit der Näherungskurven:

$$s=(5.2*10^{-3}/ (Max(x_{max},y_{max})-10)-2.5*10^{-5})*$$

$$(i-8.5)^4/ (|y_j|+35)+0.002, \qquad (4)$$

wobei

$x_{max}=Max(x_1,|x_2|)$ und $y_{max}=Max(y_1,|y_2|)$ sind.

Es wird vorausgesetzt dass $x_{max}$ oder $y_{max}$ größer ist als 10 m im Einklang mit den in der Praxis vorkommenden Gebäudemaßen. Mit dem Parameter i in Gleichung (4) werden die Stockwerke nummeriert. Beim Referenzgeschoss, wo sich die Sendeantenne befindet entspricht i = 0. Die von hier abwärts und aufwärts aufeinanderfolgenden Stockwerke sind mit i = 1,2,...,5 bezeichnet.

Die Funktion f in Gleichung (3) bewirkt eine Kurvenverschiebung.

Für das UG eines Gebäudes gilt

$$f=1.07*10^{-2} * x_{max} * y_{max}+74 \qquad (5)$$

für alle anderen Stockwerke gilt:

$$f=1.07*10^{-2} * x_{max} * y_{max}+63 \qquad (6)$$

Mit $P_{ra}(x,y_j)$ lässt sich der Referenz-HF-Empfangsleistungspegel an jedem Ort des betrachteten Stockwerkes approximieren.

Obenstehend wurde die Approximation von $P_{rref}$ durch $P_{ra}(x,y_j)$ beschrieben. Im Besitz von $P_{ra}(x,y_j)$ kann der Leistungspegel am Empfängereingang ($P_r$ in dBm) mit

$$P_r=P_{ra}(x,y_j)+G_t+G_r-a_r+10*log(P_t /1 \ W) \qquad (7)$$

bei beliebiger Leistung am Fußpunkt der Sendeantenne, für beliebige Antennen und Antennenzuleitungen zur Empfangsantenne berechnet werden.

Die Größe der Nutzzelle, das heißt der Versorgungsbereich der Sendeantenne, hängt von den Sender- und Empfängerparametern ab. Diese sind die Leistung am Fußpunkt der Sendeantenne ($P_t$ in W), der Gewinn der Sende- bzw. Empfangsantenne ($G_t$ in dBi) bzw. ($G_r$ in dBi) bezogen auf den Kugelstrahler und die Dämpfung der Zuleitung zur Empfangsantenne ($a_r$ in dB).

Der Gewinn der Sendeantenne kann aus den Strahlungsdiagrammen in der Elevations- und Azimutal-Ebene für jeden Punkt S(x,y) des betrachteten Stockwerkes berechnet werden.

Anhand eines Beispiels soll nun ein Vergleich der Messwerte mit der Approximation erfolgen. Nachfolgend sind die Baudaten des vermessenen Gebäudes der Direktion Telekom in Köln und die Positionsdaten der Sendeantenne dargestellt. Die Sendeantenne befindet sich im 2. OG. Das betrachtete Objekt ist ein Stahlbetonskelett-Gebäude mit Außenwänden aus Kalksandstein.

| | |
|---|---|
| Gebäudeart | Stahlbetonskelett |
| Außenwände | Kalksandstein |
| Gebäudebreite (m) | 62.5 |
| Gebäudelänge (m) | 52.5 |
| Anzahl der Stockwerke | 7 |
| Ort der Sendeantenne | 2. OG |
| $x_1$ (m) | 60 |
| $x_2$ (m) | -2.5 |
| $y_1$ (m) | 50 |
| $y_2$ (m) | -2.5 |

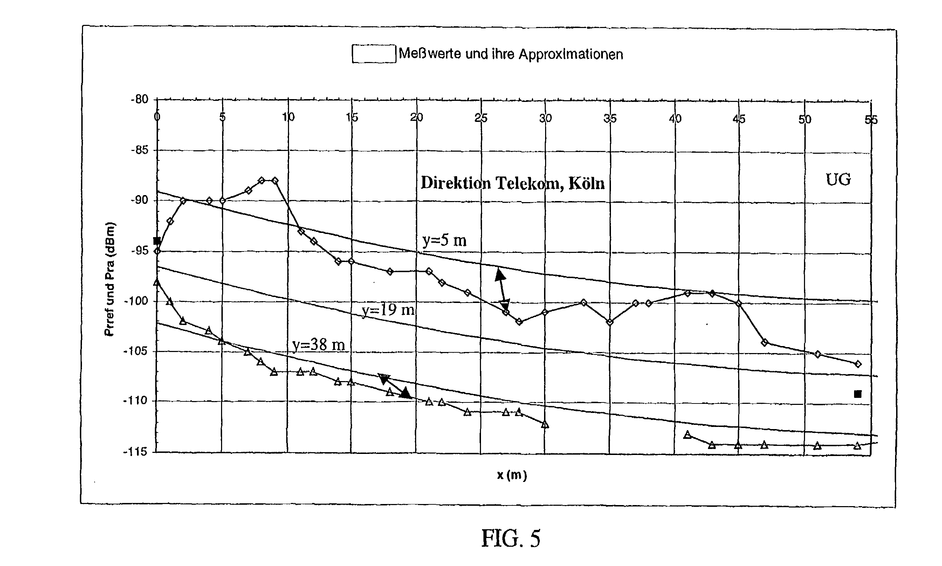

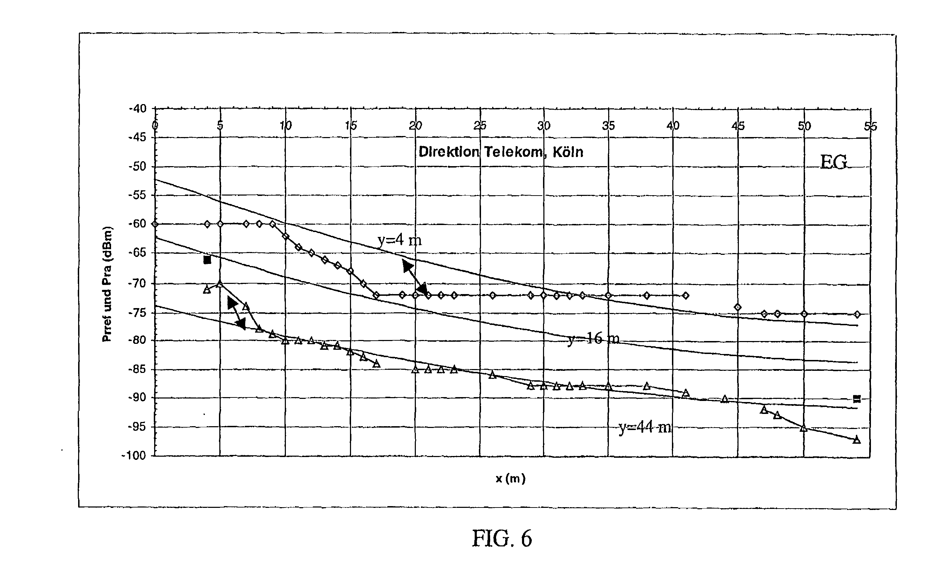

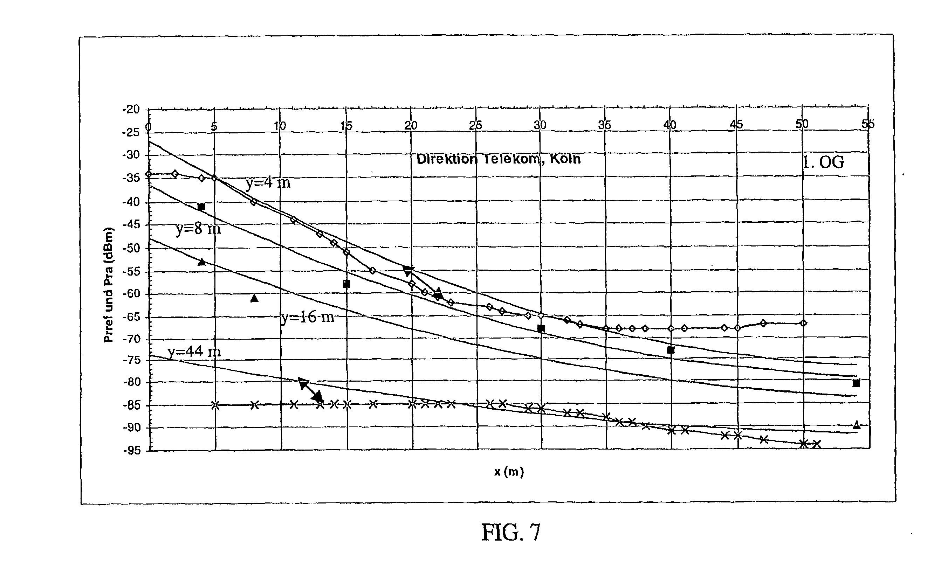

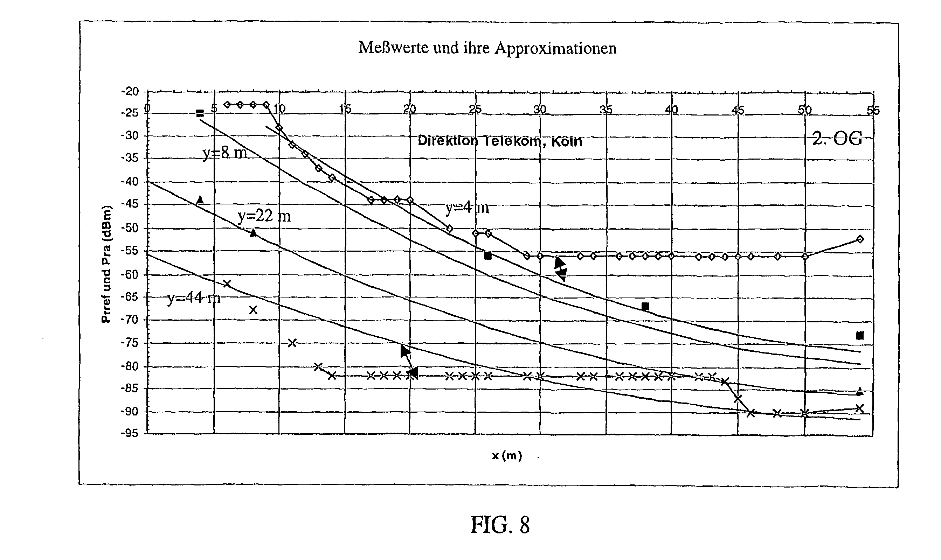

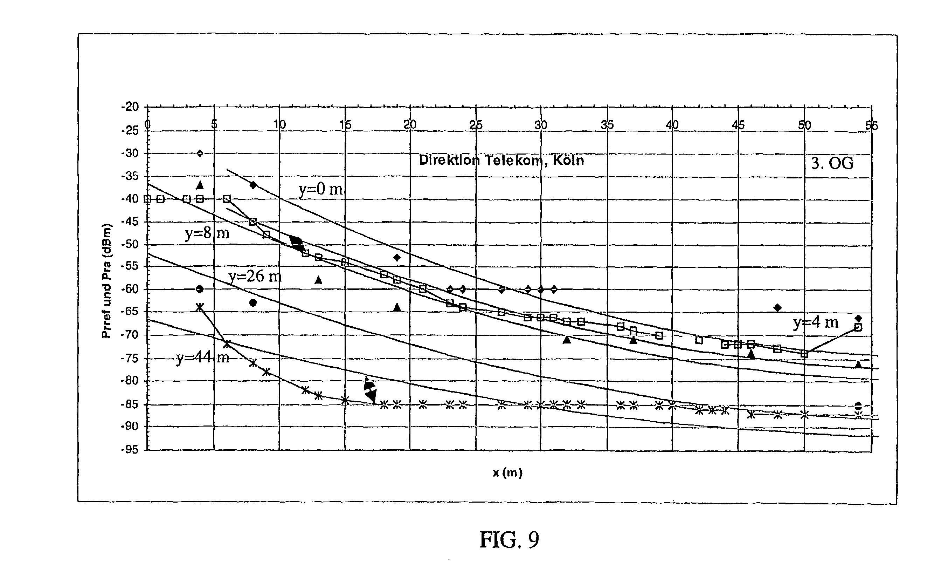

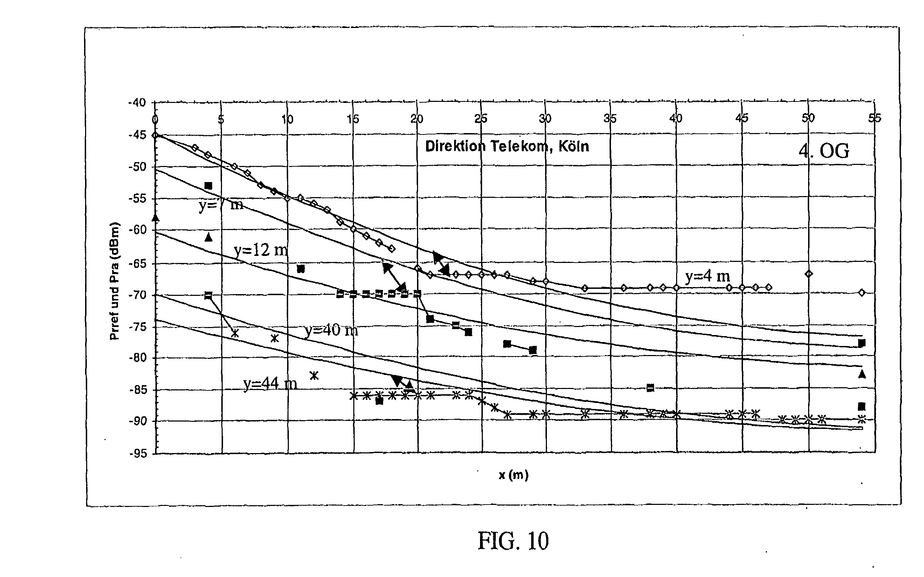

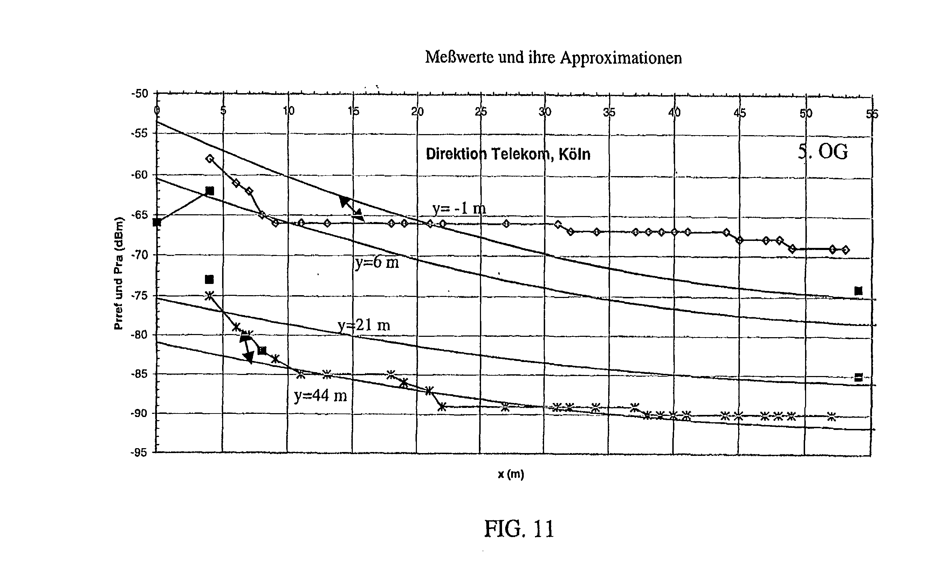

In den Figuren 5 bis 11 sind die Messergebnisse und ihre Approximationen für das betrachtete Gebäude dargestellt. Jede Figur zeigt ausgewählte Mess- und Approximationswerte für ein bestimmtes Stockwerk des Gebäudes. Auf der Abszisse ist die Distanz in x-Richtung in Meter von der Sendeantenne aufgetragen. Auf der Ordinate die gemessenen HF-Empfangsleistungswerte sowie die zugehörigen Näherungswerte der zu erwartenden Empfangsleistung. Die Distanz in y-Richtung von der Sendeantenne ist jeweils für mehrere Werte fest vorgegeben.

Die Messkurven sind anhand der Markierungen der Messpunkte erkennbar. Die Näherungskurven sind als reine Linien ohne Markierung gezeichnet. Die zusammengehörenden Kurven sind durch einen Doppelpfeil gekennzeichnet.

Die Genauigkeit der Approximation ist für eine Planung der Funkversorgung ausreichend. Die Abweichung zwischen den Mess- und Näherungswerten ist in der Regel kleiner als $\pm$ 10 dB im Erdgeschoss EG und in den höheren Stockwerken. Die Ungenauigkeit der Approximation im Untergeschoss UG kann in bestimmten Fällen, wenn z.B. unterhalb der UG-Decke viele Metallröhre verlaufen größer werden.

**Verwendete Formelzeichen**

| | |
|---|---|
| $a_r$ | Dämpfung der Zuleitung zur Empfangsantenne |
| B | 3-dB-Bandbreite des GMSK-modulierten Sendesignals |
| $B_0$ | ZF-Bandbreite des Messempfängers |
| f | Teilfunktion im $P_{ra}$ (x,y) |
| $G_r$ | Gewinn der Empfangsantenne bezogen auf den Kugelstrahler |
| $G_t$ | Gewinn der Sendeantenne bezogen auf den Kugelstrahler |
| i | Ordnungszahl der Stockwerke bezogen auf das Referenzgeschoss |
| $P_r$ | Leistungspegel am Empfängereingang |
| $P_{ra}$ | Näherungsfunktion von $P_{rref}$ |
| $P_{rref}$ | Referenz-HF-Empfangsleistungspegel |
| $P_t$ | Leistung am Fußpunkt der Sendeantenne |
| S(0,0) | Position der Sendeantenne im Ursprung des kartesischen Koordinatensystems (x=0, y=0) |
| s | Teilfunktion im $P_{ra}$ (x,y) |
| x | Distanz von der Sendeantenne in x-Richtung |
| $x_1$ | Entfernung von der Sendeantenne bis zur Innenseite der Gebäudeaußenwand in positiver x-Richtung |
| $x_2$ | Entfernung von der Sendeantenne bis zur Innenseite der Gebäudeaußenwand in negativer x-Richtung |
| y | Distanz von der Sendeantenne in y-Richtung |
| $y_1$ | Entfernung von der Sendeantenne bis zur Innenseite der Gebäudeaußenwand in positiver y-Richtung |
| $y_2$ | Entfernung von der Sendeantenne bis zur Innenseite der Gebäudeaußenwand in negativer y-Richtung |
| $U_r$ | HF-Empfangsspannungspegel |
| λ | Wellenlänge in der Luft |

**Zeichnungslegende**

| | |
|---|---|
| 1 | Messender |
| 2 | GSM-Generator |
| 3 | Leistungsverstärker |
| 4 | Isolator |
| 5 | Isolator |
| 6 | Leistungsmesser |
| 7 | Antenne |
| 8 | Messempfänger |
| 9 | Messempfänger |
| 10 | Antenne |
| 11 | Rechner |
| 12 | Wegimpulsgeber |
| 13 | Multiplexer |
| 14 | Digitalisiertablett |
| 15 | Gebäude |
| 16 | Gebäudeaußenwand |
| 17 | Sendeantenne |

**Patentansprüche**

**1.** Verfahren zur Planung der Mobilfunkversorgung innerhalb eines zu versorgenden Gebäudes, mit folgenden Schritten:

a)Positionieren einer virtuellen Sendeantenne unter Vorgabe bestimmter Sendeparameter an einem beliebigen zur Verfügung stehenden Ort innerhalb des Gebäudes;

b)Ermitteln der Größe des Versorgungsbereichs der Sendeantenne innerhalb des Gebäudes mit Hilfe eines Prädiktionsverfahrens zur Bestimmung des HF-Empfangspegels, wobei die Prädiktion der Größe des Versorgungsbereichs durch Ermitteln des an beliebigen Punkten (x,y) des Gebäudes zu erwartenden HF-Empfangsleistungspegels $P_{ra}(x,y)$ anhand der Gleichung:

$$P_{ra}(x,y_j)=s[(|x|-Max(x_1,|x_2|))^2 + (|y_j|-Max(y_1,|y_2|))^2]-f$$

erfolgt, wobei sich die Teilfunktion s ergibt zu:

$$s=(5.2*10^{-3} / (Max(x_{max},y_{max})-10)-2.5*10^{-5})* (i-8.5)^4$$

$$/(|y_j|+35)+0.002,$$

mit $x_{max} = Max(x_1, |x_2|)$ und $y_{max}= Max(y_1, |y_2|)$ sowie i = Nummer des Stockwerks und sich die Teilfunktion f ergibt zu:

$$f = 1.07*10^{-2} * x_{max} * y_{max}+74$$

für das Untergeschoss des Gebäudes,und

$$f = 1.07*10^{-2} * x_{max} * y_{max}+63$$

für alle anderen Stockwerke;
c)Prüfen, ob der ermittelte Versorgungsbereich / die ermittelten Versorgungsbereiche das gesamte Gebäude umfasst / umfassen, und
Falls zutreffend:

Beenden der Verfahrens;

Falls unzutreffend:

Vergrößern des Versorgungsbereichs durch Änderung der Senderparameter der virtuellen Sendeantenne; und/oder
Positionieren mindestens einer weiteren virtuellen Sendeantenne an einem beliebigen, zum Standort der ersten Antenne entfernten Ort des Gebäudes und Ermitteln der Größe des Versorgungsbereichs der weiteren Sendeantenne innerhalb des Gebäudes anhand des Prädiktionsverfahrens;

d)Fortsetzung des Verfahrens bei Verfahrensschritt c)

2. Verfahren nach Anspruch 1, **dadurch gekennzeichnet, dass** für eine Anpassung der Verkehrskapazität im Gebäude eine Änderung der Versorgungsbereiche durch Änderung der Sendeparameter der Sendeantenne(n) und eine Einrichtung zusätzlicher virtueller Sender mit Sende antennen erfolgt.

3. Verfahren nach einem oder mehreren der vorhergehenden Ansprüche, **dadurch gekennzeichnet, dass** für die Anwendung des Prädiktionsverfahrens wenigstens folgende Parameter des Gebäudes verwendet werden:

- Gebäudebauart
- Breite und Länge des Gebäudes zwischen den Innenseiten der Außenwände
- Anzahl und Höhe der Stockwerke
- Art der Verglasung.

4. Verfahren nach einem oder mehreren der vorhergehenden Ansprüche, **dadurch gekennzeichnet, dass** das Verfahren für alle gängigen Gebäudebauarten, insbesondere Stahlbetonskelett-Konstruktionen und/oder Mauerwerksgebäude anwendbar ist.

5. Verfahren zur Berechnung des HF-Leistungspegels eines in einem Gebäude angeordneten GSM-Basisstationssenders am Empfängereingang einer Mobilstation innerhalb des Gebäudes, unter Verwendung der Gleichung:

$$P_{ra}(x,y_j) = s\,[\,(\,|x| - Max\,(\,x_1,\,|x_2|\,)\,)^2$$

$$+ (\,|y_j| - Max\,(\,y_1,\,|y_2|\,)\,)^2]- f,$$

wobei $P_{ra}(x,y_j)$ den HF-Empfangspegel an beliebigen Punkten $S(x,y)$ innerhalb des Gebäudes für das Stockwerk in dem sich der Sender befindet und mehrere Stockwerke oberhalb und unterhalb von diesem Stockwerk angibt, wobei sich die Teilfunktion s ergibt zu:

$$s = (5.2*10^{-3}\,/\,(Max(x_{max},y_{max})-10)-2.5*10^{-5})*(i-8.5)^4$$

$$/\,(|y_j|+35)+0.002,$$

mit $x_{max} = Max(x_1,\,|x_2|\,)$ und $y_{max}= Max(y_1,\,|y_2|)$ sowie i = Nummer des Stockwerks und sich die Teilfunktion f ergibt zu:

$$f = 1.07*10^{-2}\,{}_*\,x_{max\,*}\,y_{max}+74;$$

für das Untergeschass des Gebäudes, und

$$f = 1.07*10^{-2}\,{}_*\,x_{max\,*}\,y_{max}+63;$$

für alle anderen Stockwerke, wobei sich der tatsächliche zu erwartende Leistungspegel am Empfängereingang der Mobilstation bei beliebiger Leistung am Fußpunkt der Sendeantenne, beliebigen Antennen und Antennenzuleitungen zur Empfangsantenne berechnet zu:

$$P_r = P_{ra}(x,y_j) + G_t + G_r - a_r + 10_*\log(P_t/1\;W)\,,$$

mit

$G_t$: Gewinn der Sendeantenne,
$G_r$: Gewinn der Empfangsantenne,
$a_r$: Dämpfung der Zuleitung zur Empfangsantenne,
$P_t$: Leistung am Fußpunkt der Sendeantenne.

**Claims**

1. Process for planning the mobile telephone supply within a building to be supplied, having the following steps:

   a) positioning a virtual transmitting antenna while presetting certain transmitting parameters at any available site within the building;
   b) determining the size of the supply region of the transmitting antenna within the building with the aid of a prediction process for determining the HF receiving level, wherein the prediction of the size of the supply region is effected by determining the HF-receiving power level $P_{ra}(x, y)$ to be expected at any points (x, y) of the building using the equation:

$$P_{ra}(x, y_j) = s[(|x|-Max(x_1,|x_2|)^2 + (|y_j|-Max(y_1,|y_2|))^2]-f,$$

wherein the part function s is produced to give:

$$s = (5.2*10^{-3}/(Max(x_{max}, y_{max})-10)-2.5*10^{-5})*(i-8.5)^4 /(|y_j|+35) + 0.002,$$

where $x_{max} = Max(x_1, |x_2|)$ and $y_{max} = Max(y_1, |y_2|)$ and i = number of the floor
and the part function f is produced to give:

$$f = 1.07* 10^{-2} * x_{max} * y_{max}+74$$

for the basement of the building, and

$$f= 1.07*10^{-2} * x_{max} * y_{max}+63$$

for all other floors;
c) testing whether the supply region determined/the supply regions determined comprises/comprise the entire building, and
if applicable:

    ending the process;
    if inapplicable:

        enlarging the supply region by changing the transmitting parameters of the virtual transmitting antenna;
        and/or
        positioning at least one further virtual transmitting antenna at any site of the building remote to the location of the first antenna and determining the size of the supply region of the further transmitting antenna within the building using the prediction process;

    d) continuing the process for process step c).

**2.** Process according to claim 1, **characterised in that** for adaptation of the traffic capacity in the building, a change of the supply regions is effected by changing the transmitting parameters of the transmitting antenna(e) and fitting of additional virtual transmitters with transmitting antennae.

**3.** Process according to one or more of the preceding claims, **characterised in that** for application of the prediction process, at least the following parameters of the building are used:

- building construction
- width and length of the building between the inner sides of the outer walls
- number and height of the floors
- type of glazing.

**4.** Process according to one or more of the preceding claims, **characterised in that** the process can be applied for all common building constructions, in particular reinforced concrete skeleton constructions and/or brickwork buildings.

**5.** Process for calculating the HF power level of a GSM base station transmitter arranged in a building at the receiver input of a mobile station within the building, using the equation:

$$P_{ra} (x, y_j) = s[(|x|-Max(x_1,|x_2|))^2 + (|y_j|-Max(y_1,|y_2|))^2 ]-f,$$

wherein $P_{ra} (x, y_j)$ indicates the HF receiving level at any points S(x, y) within the building for the floor on which the transmitter is situated and several floors above and below this floor,
wherein the part function s is produced to give:

$$s = (5.2* 10^{-3}/(Max(x_{max}, y_{max})-10)-2.5*10^{-5})* (i-8.5)^4 /(|y_j|+35)+0.002,$$

where $x_{max}$ = Max($x_1$, |$x_2$|) and $y_{max}$ = Max($y_1$, |$y_2$|) and i = number of the floor
and the part function f is produced to give:

$$f = 1.07*10^{-2} * x_{max} * y_{max}+74$$

for the basement of the building, and

$$f = 1.07*10^{-2} * x_{max} * y_{max}+63$$

for all other floors,
wherein the actual power level to be expected at the receiver input of the mobile station is calculated at any power at the foot point of the transmitting antenna, any antennae and antenna supply lines to the receiving antenna to give:

$$P_r = P_{ra}(x, y_j) + G_t + G_r- a_r + 10*log(P_t/1 \ W),$$

where

$G_t$: gain of the transmitting antenna,
$G_r$: gain of the receiving antenna,
$a_r$: damping of the supply line to the receiving antenna,
$P_t$: power at the foot point of the transmitting antenna.

## Revendications

1. Procédé pour planifier la couverture radiotéléphonique à l'intérieur d'un bâtiment à couvrir, comprenant les étapes suivantes :

    a) positionnement d'une antenne émettrice virtuelle avec prédéfinition de certains paramètres d'émission à un endroit disponible quelconque à l'intérieur du bâtiment ;
    b) calcul de la taille de la zone de couverture de l'antenne émettrice à l'intérieur du bâtiment, à l'aide d'un procédé de prédiction pour définir le niveau de réception H.F., la prédiction de la taille de la zone de couverture se faisant grâce au calcul du niveau de puissance de réception H.F. $P_{ra}$(x,y) à prévoir au niveau de points quelconques (x, y) du bâtiment, à l'aide de l'équation :

$$P_{ra}(x,y_j)=s[(|x|-Max(x_1, (|x_2|))^2 + (|y_j|-Max(y_1,|y_2|))^2]-f,$$

avec la fonction partielle s :

$$s=(5.2*10^{-3} /(Max(x_{max},y_{max})-10)-2.5*10^{-5})*(i-8.5)^4$$

$$/ (|y_j|+35) +0.002,$$

dans laquelle $x_{max}$ = Max($x_1$,|$x_2$|) et $y_{max}$=Max($y_1$ ,|$y_2$|) et
i = numéro de l'étage,
et avec la fonction partielle f :

$$f = 1.07*10^{-2} * x_{max} * y_{max}+74$$

pour le rez-de-chaussée du bâtiment, et

$$f = 1.07*10^{-2} * x_{max} * y_{max} + 63$$

pour tous les autres étages ;
c) vérification pour voir si la/les zones de couverture calculées comprennent tout le bâtiment, et si oui :

    fin du procédé ;

sinon :

    augmentation de la zone de couverture grâce à une modification des paramètres d'émetteur de l'antenne émettrice virtuelle ;

et/ou positionnement d'au moins une antenne émettrice virtuelle supplémentaire à un endroit quelconque du bâtiment situé loin de l'emplacement de la première antenne, et calcul de la taille de la zone de couverture de cette antenne émettrice supplémentaire à l'intérieur du bâtiment, à l'aide du procédé de prédiction ;
d) poursuite du procédé en c).

2.  Procédé selon la revendication 1, **caractérisé en ce que** pour une adaptation de la capacité de trafic dans le bâtiment, une modification des zones de couverture a lieu grâce à une modification des paramètres d'émission de l'antenne émettrice ou des antennes émettrices et grâce à l'installation d'émetteurs virtuels supplémentaires avec des antennes émettrices.

3.  Procédé selon l'une au moins des revendications précédentes, **caractérisé en ce que** pour l'application du procédé de prédiction, on utilise au moins les paramètres suivants du bâtiment :

-   type de bâtiment
-   largeur et longueur du bâtiment entre les côtés intérieurs des murs extérieurs
-   nombre et hauteur des étages
-   type du vitrage.

4.  Procédé selon l'une au moins des revendications précédentes, **caractérisé en ce que** le procédé est applicable pour tous les types de construction de bâtiments courants, en particulier les constructions en ossature en béton armé et/ou les bâtiments en maçonnerie.

5.  Procédé pour calculer le niveau de puissance H.F. d'un émetteur de station de base GSM disposé dans un bâtiment, à l'entrée de récepteur d'une station mobile à l'intérieur du bâtiment, en utilisant l'équation :

$$P_{ra}(x,y_j) = s \left[ \left( |x| - Max(x_1, |x_2|) \right)^2 \right.$$

$$\left. + \left( |y_j| - Max(y_1, |y_2|) \right)^2 \right] - f,$$

$P_{ra}(x,y_j)$ indiquant le niveau de réception H.F. à des points quelconques $S(x,y)$ à l'intérieur du bâtiment pour l'étage où se trouve l'émetteur et pour plusieurs étages au-dessus et au-dessous de cet étage, avec la fonction partielle s :

$$s = (5.2*10^{-3} / (Max(x_{max}, y_{max})-10) - 2.5*10^{-5})*(i-8.5)^4$$

$$/(|y_j|+35)+0.002,$$

dans laquelle $x_{max} = Max(x_1, |x_2|)$ et $y_{max} = Max(y_1, |y_2|)$ et
i = numéro de l'étage,
et avec la fonction partielle f :

$$f = 1.07*10^{-2} * x_{max} * y_{max} + 74 \ ;$$

pour le rez-de-chaussée du bâtiment, et

$$f = 1.07*10^{-2} * x_{max} * y_{max} + 63 \ ;$$

pour tous les autres étages ; étant précisé que l'on calcule le niveau de puissance réel à prévoir, à l'entrée de récepteur de la station mobile pour une puissance quelconque à la base de l'antenne réceptrice, sur des antennes et conduites d'amenée d'antennes quelconques vers l'antenne réceptrice, de la manière suivante :

$$P_r = P_{ra}(x,y_j) + G_t + G_r - a_r + 10.\log(P_t/1 \ W) \ ,$$

avec

$G_t$ : gain de l'antenne émettrice,
$G_r$ : gain de l'antenne réceptrice,
$a_r$ : affaiblissement de la conduite d'amenée vers l'antenne réceptrice,
$P_t$ : puissance à la base de l'antenne émettrice.

EP 1 273 115 B1

**Figur 1**

**Figur 2**

$U_r$ (dBµV)

Figur 3

Figur 4

Meßwerte und ihre Approximationen

Direktion Telekom, Köln

UG

y=5 m

y=19 m

y=38 m

Prref und Pra (dBm)

x (m)

FIG. 5

EP 1 273 115 B1

FIG. 6

FIG. 7

Meßwerte und ihre Approximationen

FIG. 8

EP 1 273 115 B1

FIG. 9

FIG. 10

Meßwerte und ihre Approximationen

Direktion Telekom, Köln

5. OG

y= -1 m

y=6 m

y=21 m

y=44 m

Pref und Pra (dBm)

x (m)

FIG. 11

EP 1 273 115 B1